Europäisches Patentamt

European Patent Office

Office européen des brevets

(11) Publication number: **0 279 518
A2**

## (12) EUROPEAN PATENT APPLICATION

(21) Application number: 88300470.7

(51) Int. Cl.⁴: **C04B 35/58**

(22) Date of filing: **20.01.88**

(30) Priority: **20.01.87 US 4951**

(43) Date of publication of application:
**24.08.88 Bulletin 88/34**

(84) Designated Contracting States:
**DE FR GB IT NL SE**

(71) Applicant: **KERAMONT ADVANCED CERAMIC PRODUCTS CORPORATION**
**4233 S. Fremont Avenue**
**Tucson Arizona 85714(US)**

(72) Inventor: **Mallia, Robert A.**
**4751 W. Placita Del Suerte**
**Tucson Arizona 85745(US)**
Inventor: **Loutfy, Raouf O.**
**4660 N. Via Madre**
**Tucson Arizona 85749(US)**
Inventor: **Withers,James C.**
**720 N. Kolb Road**
**5, Tucson, Arizona 85710(US)**

(74) Representative: **Whalley, Kevin et al**
**MARKS & CLERK 57/60 Lincoln's Inn Fields**
**London WC2A 3LS(GB)**

(54) **Process for preparing aluminium nitride powder, and aluminium nitride bodies obtained therefrom.**

(57) A process for preparing an aluminium nitrade powder giving high green and fired density and high green strength bodies, with high thermal conductivity, comprising mixing an aluminium nitride powder with a sintering aid and a grinding aid, said AlN powder having an average particle size below 5 microns and greater than 0.5 microns, a content of $Al_2O_3$ + Al metal not greater than 10% by weight calculated as Al, the $Al_2O_3$ content being not greater than 5% calculated as Al when Al metal is absent, and a content of other impurities not greater than 4% by weight calculated as elements; milling the mixture obtained in order to homogenize it and to obtain a tap density of at least 1.0 g/cc; and screening the milled mixture using a screen ranging from 1/8 mesh to 200 mesh.

EP 0 279 518 A2

## "PROCESS FOR PREPARING ALUMINIUM NITRIDE POWDER, AND ALUMINIUM NITRIDE BODIES OBTAINED THEREFROM"

This invention relates to a process for preparing aluminium nitride powder, and aluminium nitride bodies obtained therefrom having high green density, high green strength and high thermal conductivity.

More particularly, this invention relates to a process for preparing aluminium nitride powders having high purity, for obtaining formed and compacted bodies having high green density and high green strength and sintered ceramic bodies having high termal conductivity and high fired density.

In recent years the semiconductor industry has made remarkable progress. The materials for circuit constituents, such as semiconductor chips, have become very important and are required to possess different combinations of properties such as high thermal conductivity, high mechanical strength, low dielectric constant, good wettability by metal and corrosion resistance.

Among ceramic meterials known in the art, aluminium nitride (AlN) has been found to be that which best satisfies the aforesaid requirements.

Various methods are known in the art for preparing AlN powders leading to sintered bodies having the best combination of the above-indicated properties.

In U.S. Patent No. US-A-3,108,887 is described a method consisting of reacting aluminium with nitrogen to obtain AlN powders having good characteristics.

It is pointed out that in order to obtain a good sintered ceramic body it s necessary to use all AlN powder subjected to a prolonged ball milling.

In order to obtain sintered ceramics having high densities it is necessary to keep the diameters of AlN particles in a strictly defined range. Milling is continued preferably until the bulk of AlN has a size below 5 microns.

Sintered ceramic obtained by this method has low thermal conductivity and moreover low green strength.

In British Patent specification No. GB-A-2,127,390 is described a method of obtaining sintered ceramic having an improved thermal conductivity; said method comprises reacting $Al_2O_3$ with $N_2$ in the presence of reducing agents. According to this prior specification the Al metal impurities are kept at a very low level. Also, this method nevertheless does not result in a combination of satisfactory characteristics.

It has been surprisingly found that independently from the method of preparing AlN powder and from the presence of metallic Al in the starting AlN powder, it is possible to obtain an optimum combination of the above-mentioned properties.

the present invention provides a process for preparing an aluminium nitride powder, giving high density and high strength green bodies, in particular giving aluminium nitride bodies having high green density, high fired density and high thermal conductivity, the process comprising:

a) mixing an aluminium nitride (AlN) power with a sintering aid and a grinding aid, said AlN powder having an average particle size below 5 microns and greater than 0.5 microns, a content of $Al_2O_3$ + Al metal not greater than 10% by weight calculated as Al, the $Al_2O_3$ content being not greater than 5 percent calculated as aluminium when Al metal is absent, and a content of other impurities not greater than 4 percent by weight calculated as elements;

b) milling the mixture obtained in step a) in order to homogenize it until the tap density is at least 1.0 g/cc; and

c) screening the milled mixture using a screen ranging from 1/8 mesh to 200 mesh.

The invention also provides ceramic bodies obtained from the AlN powder prepared above.

The starting AlN powder used in step a) can be any commercial AlN powder, obtained according to any known process, comprising as starting substance $Al_2O_3$, Al or $AlCl_3$ and nitriding agents such as $N_2$, $NH_3$, etc.

Any commercial AlN powder containing $Al_2O_3$, or also containing Al metal, in the remarkable amounts comprised within the maximum values above mentioned, can be used in the process of the present invention.

Processes for obtaining the AlN powder are disclosed in the above-mentioned prior patents.

As sintering aids there can be used any sintering aid known in the art, for example oxides or fluorides of metals selected from the group yttrium, the rare earth metals (lanthanum, cerium, praseodymium, neodymium, samarium, gadolinium, dysprosium, etc.), and the alkaline earth metals (Ca, Sr, Ba), and preferably $Y_2O_3$, $YF_3$ and $CaF_2$.

These sintering aids are described, for example, in European Patent Application nos. EP-A-153,737 and EP-A-166,073, and in U.S. patent no. US-A-3,108,887.

As grinding aids there can be used any type of grinding aid known in the art, preferably glycerol trioleate and Menhaden fish oil, DEFLOC, etc.

The milling can be carried out according to the dry or wet method, in such working conditions as to obtain a milled powder suitable to be screened in the range indicated above. The milling is preferably a dry milling. In general, the grinding requires some hours, usually about 3-4 hours.

For the screening, it is important to use the maximum mesh value screen which permits carrying out the screening of the product. Generally, mesh values from 35 to 150 are suitable.

Dry AlN powder ofter blinds the screen, and thus a large screen (mesh size) is required. Wet milled AlN powder allows the use of a screen having higher mesh value.

For better comprehension of the invention, the properties of AlN powder and after the treatment according to the present invention are summarized hereinbelow. A commerical AlN powder (from Stark) having an average particle size $d_{50}$ of 1.1 microns and a surface area of 6 $m^2/g$ was used.

The $d_{50}$ is calculated according to "Particle Size Measurements" by Terence Allen, 2nd Ed., 1975, Chapman and Hall, London (pp. 84-89).

A) A portion of the above said AlN powder was mixed with yttria as a sintering aid and with glycerol trioleate as a grinding agent and pressed at 10,000 and 30,000 psi respectively without further treatment.

B) A second portion of the powder containing the same additives was milled in a ball mill of 20 l capacity, containing 15 Kg of high purity alumina balls as grinding media. The milling was carried out for 3 hours and pressed as in A) above.

C) A third portion of the powder containing the same additives was treated according to the invention, that is: milling as in B) above, and subsequently screening using a 35 mesh screen. The screened powder was pressed in a 1.2 inch diameter steel die previously sprayed with silicone for an easy release of the pressed sprill from the die. The pressing was carried out at 10,000 and 30,000 psi, respectively.

The powders as treated above were chemically analyzed and the corresponding sprills were measured for green density as calculated from the dimensions and the weight and green strength tests using ASTM procedure No. B-312-69.

### TABLE 1

### CHEMICAL ANALYSIS OF THE POWDERS

| Component (% by weight) | AlN commercial powder | AlN milled powder | AlN milled and screened powder |
|---|---|---|---|
| AlN | 87.80 | 92.17 | 94.59 |
| $Al_2O_3$ | 4.21 | 6.10 | 4.0 |
| Al metal | 4.17 | 1.45 | 0.01 |

\* \* \* \* \* \* \* \*

### TABLE 1A

### MECHANICAL PROPERTIES

| | Green density (g/cc) | | Green Strength (lbs.) | | Fired Density (g/cc) | |
|---|---|---|---|---|---|---|
| | 10,000 psi | 30,000 psi | 10,000 psi | 30,000 psi | 10,000 psi | 30,000 psi |
| Sprill A) | 1.721 | 1.866 | 22.16 | 13.16 | 2.719 | — |
| Sprill B) | 1.835 | 1.918 | 8.14 | 5.68 | 3.191 | 3.167? |
| Sprill C) | 1.822 | 1.962 | 13.87 | 16.00 | 3.246 | 3.215 |

Sprill A means the green body obtained by using the powder as received, and sprill B and C refer to the powders obtained by following the steps B) and C) described above.

As is apparent from Table 1, the process of the present invention allows metallic Al to be removed almost completely, and to remarkably reduce the content of $Al_2O_3$.

As is apparent from Table 1A, the process of the present invention affords the best combination of green density, green strength and fired density.

The green density is a very important characteristic in view of the high fired density of the final sintered body. The value of the green density increases owing to the homogenization of the particles during the milling; on the contrary, the green strength strongly decreases owing to the milling, so that the characteristics of mechanical strength of the fired body are compromised. When the screening after the milling is carried out, the green density maintains high values whereas the green strength increases (reaches high values).

Owing to the high values of green density and consequently of the fried density of the sintered bodies obtained according to the invention, these also show good values of the thermal conductivity. The thermal conductivity is calculated by using the following formula:

$\lambda = \alpha.C_p.d.100$, in which $C_p$ is the specific heat, d is the density, and $\alpha$ is the thermal diffusity.

The invention will be further described with reference to the following illustrative Examples.

## Example 1

300 g of aluminium nitride powder S (Stark powder) having average particle size $d_{50}$ of 1.1 microns, a surface area of $6m^2/g$ and having the composition given in Table 1C below, were mixed with 51.5g or $Y_2O_3$ - (sintering aid) and 25.8 g of glycerol trioleate (grinding aid). The mixture was charged into a 20 litre jar containing 15 Kg of high purity alumina grinding media (50% alumina balls having 1/2 inch diameter and 50% having 3/16 inch diameter). Milling was carried out for 3 hours.

Milled powder was screened using a 35 inch mesh screen. The chemical analysis of the milled and milled-screened powders was carried out on conventional instruments such as Kjeldahl, ICP, AA, and IS techniques. The nitrogen was determined using the Kjeldahl method, and the elements were determined using ICP techniques; oxygen and carbon were determined using LECO analysis reported in Table 1.

The screen powder was placed in a 1.2 inch diameter steel die which had been silicon sprayed for easy release of the sprill from the die. The powder was pressed at 10,000 psi and 30,000 psi and two sprills (1.2" diameter by about 0.25" height) were produced. The green density of the sprills was calculated from the dimension and weight of the sprills; the green strength was measured using ASTM procedure number B-312-69. The sprills pressed at 10,00 psi were sintered at 1850°C and maintained at this temperature for 2 hours. The sintered density was calculated from the dimension and weight of the sprills.

the green density, green strength, and fired density (ASTM 373-72) are reported in Table 2.

## TABLE 1C

### Chemical Analysis of AlN Powder S

| Component Wt. % | Commercial Powder | Milled | Milled-Screened |
|---|---|---|---|
| AlN* | 87.80 | 92.17 | 94.59 |
| $Al_2O_3$* | 4.21 | 6.10 | 4.00 |
| Al metal* | 4.17 | 1.45 | 0.01 |

\* AlN content is calculated from the nitrogen analysis and $Al_2O_3$ content is calculated from oxygen analysis. Al metal is calculated from the total analyzed Al subtracting Al due to AlN and $Al_2O_3$.

\* \* \* \* \* \* \* \*

## TABLE 2

### Green Density, Green Strength, Fired Density and Thermal Conductivity of AlN Ceramic Bodies Using Powder S Pressed At 10,000 psi

| | g.d. (g/cc) | g.s. (lbs.) | F.D. (g/cc) | Thermal Conductivity (w/mk) |
|---|---|---|---|---|
| A) (as received) | 1.721 | 22.16 | 2.719 | * |
| B) (after milling) | 1.835 | 8.14 | 3.191 | 49 |
| C) (milled screened) | 1.822 | 13.87 | 3.244 | 110 |

\* Sample cracked during sintering.

After milling (B), the tap density was 1.18 g/cc. The thermal conductivity was calculated for the sintered body using the conventional "laser flash technique" and the formula

$$\lambda = \alpha . C_p . d . 100$$

Where $\lambda$ is the calculated thermal conductivity, $\alpha$ is the thermal diffusivity, $C_p$ is the heat capacity and d is the density. The thermal conductivity for sprill made of AlN as received (untreated) could not be measured because the sample cracked during sintering. However, from the significantly low fired density (compared to the treated powder) it can be expected to have a low thermal conductivity. From the results of Table 2 and Table 1C it becomes apparent that treating the AlN powder according to the invention results in high values of thermal conductivity. This can be related to the effect of screening after milling on the chemistry of the powder (Table 1C), when residual Al metal is almost completely eliminated and the oxygen level is reduced. Both impurities are known to cause severe decrease in the thermal conductivity of aluminium nitride sintered bodies.

The balance of these materials is carbon and other minor impurities such as Na, Si, Ti, etc., and compounds thereof.

N.A. = not analyzed; in any case it is apparent from the literature that the fired density of sprills pressed at 30,000 psi would be greater than that available when pressed at 10,000 psi.

5

Example 2

Example 1 was repeated but using a commercial AlN powder by Denka (powder D). AlN powder D having a $d_{50}$ particle size of 0,96 microns and a surface area of 4.9 m²/g was used to prepare sprills according to Example 1. The analysis of the powders before and after the various treatments are given in Table 3.

These results indicate the heterogeneity of different samples of the starting material, which is expected in ceramic powder. Even in this case, the screening after milling permits the Al metal to be eliminated without altering the $Al_2O_3$ content with respect to the original sample.

## TABLE 3

### Chemical Analysis of Two Samples of AlN Powder D

| Component (wt. %) | Commerical Powder as received | | Milled-Screened | |
|---|---|---|---|---|
| | Sample 1 | Sample 2 | Sample 1 | Sample 2 |
| AlN | 96.58 | 95.47 | 97.88 | 94.88 |
| $Al_2O_3$ | 2.12 | 3.97 | 2.02 | 3.88 |
| Al metal | 0.5 | 0.025 | 0.00 | 0.00 |

The green density, green strength, and fired density of sprills obtained by following the same procedure of Example 1 by using powder D are reported in Table 4.

❋ ❋ ❋ ❋ ❋ ❋ ❋

## TABLE 4

### Green Density, Green Strength, and Fired Density of Powder D Pressed at 30,000 psi

| | g.d. (g/cc) | g.s(lb.) | F.d(g/cc) |
|---|---|---|---|
| A) | 2.014 | 3.55 | -- |
| B) | 2.080 | 1.0 | 2.86 |
| C) | 2.082 | 2.2 | 3.16 |

After milling (B), the tap density was 1.32 g/cc. A substantial increase in fired density was observed by treating AlN powder D according to the invention. The combination of this increased fired density and the enhancement in the powder chemistry (Table 3) will infer higher thermal conductivity for a AlN ceramic body obtained via this invention

Example 3

Example 1 was repeated but using a commercial AlN powder by Toshiba (powder T). AlN powder T having a particle size of 4.3 microns (see point j) and a surface area of 1.0 m²/g was used to prepare sprills according to Example 1. The analysis of the powders before and after the various treatments are reported in Table 5.

## TABLE 5

### Chemical Analysis of AlN Powder T

| Components | Commercial Powder | Milled-Screened |
|---|---|---|
| AlN (wt. %) | 95.67 | 95.15 |
| $Al_2O_3$ (wt. %) | 4.33 | 4.05 |
| Al metal (wt. %) | 0.00 | 0.00 |

The green density, green strength, and fired density are reported in Table 6.

\* \* \* \* \* \*

## TABLE 6

### Green Density, Green Strength, and Fired Density of Powder T (See Point g)

| | g.d. (g/cc) | g.st. (lbs) | f.d. (g/cc) |
|---|---|---|---|
| B (10,000 psi | 2.081 | 0.00 | 2.59 |
| (30,000 psi | 2.163 | 0.00 | 2.71 |
| C (10,000 psi | 2.015 | 1.56 | 2.839 |
| (30,000 psi | 2.127 | 0.8 | 2.868 |

After milling (step B) the tap density was 1.51 g/cc. Here again, a substantial increase in fired density is observed, in addition to the increase in the green strength, while maintaining the high green density via this invention procedure. The relatively high fired density of the treated AIN powder will also infer high thermal conductivity.

**Claims**

1. A process for preparing an aluminium nitride powder, characterized by comprising the steps of:
   a) mixing an aluminium nitride (AlN) powder with a sintering aid and a grinding aid, said AlN powder having an average particle size below 5 microns and greater than 0.5 microns, a content of $Al_2O_3$ + Al metal not greater than 10% by weight calculated as Al, the $Al_2O_3$ content being not greater than 5% calculated as Al when Al when Al metal is absent, and a content of other impurities not greater than 4% by weight calculated as elements;
   b) milling the mixture obtained in step a) in order to homogenize it and to obtain a tap density of at least 1.0 gm/cc; and
   c) screening the milled mixture using a screen ranging from 1/8 mesh to 200 mesh.

2. A process as claimed in claim 1, characterized in that the sintering aid is at least one member selected from the oxides and fluorides of the group of yttrium, the rare earth metals and the alkaline earth metals.

3. A process as claimed in claim 1 or 2, characterized in that Al metal is absent in the AlN powder.

4. A process as claimed in claim 1 or 2, characterized in that the content of $Al_2O_3$ + Al is not greater than 5% by weight in the AlN powder.

5. A process as claimed in any of claims 1 to 4, characterized in that the milling is a dry milling.

6. A process as claimed in any of claims 1 to 5, characterized in that a screen of 35 mesh is used in the step c).

7. An aluminium nitride ceramic body obtained from the powder of any preceding claim.